# EUROPEAN PATENT SPECIFICATION

(11) **EP 0 390 233 B1**
(45) Date of publication and mention of the grant of the patent: **13.10.1993**
(21) Application number: 90200394.6
(22) Date of filing: 21.02.1990
(51) Int. Cl.: A22C 11/02

(54) **Auxilliary tool for filling sausages**
Zusatzgerät für eine Wurstfüllvorrichtung
Outil auxiliaire pour appareil de bourrage de saucisses

(30) Priority: 31.03.1989 NL 8900790
(43) Date of publication of application: 03.10.1990
(73) Proprietor: KREHALON BENELUX N.V., B-2240 Zandhoven (BE)
(72) Inventor: de Winter, J.H.A., B-2100 Deurne (BE)
(74) Representative: Kooy, Leendert Willem

(56) References cited:
- DE-A- 2 065 132
- DE-A- 2 122 649
- DE-A- 2 141 955
- FR-A- 2 330 064
- US-A- 3 553 768

## Description

This invention relates to an auxiliary tool for filling sausages, provided with a filling horn equipped with an intestine brake, which horn can be coupled to a sausage-filling apparatus, said auxiliary tool substantially comprising a support line for the sauvages and counter-pressure means which are mounted above said support line, and comprise a reciprocating pressure plate pushing against the extremity of the sauvage during filling.

Such an auxiliary tool is known from DE-A-2 065 132. In this tool two pressure plates are mounted on the extremity of a piston rod of a hydraulic or pneumatic cylinder, and consequently their displacement due to the pressure exerted by the front extremity of a sauvage during filling is controlled by the pressure inside the cylinder.

The invention aims to provide for an auxiliary tool which meets the observed need for a larger, longer and therefore heavy, dry sauvage. Especially saveloy is considered, having a length of approximately 1.5 meter and a diameter of approximately 20 cm, and extremities as flate as possible in order to be handled on a so-called carving line, without resulting in a large number of slices having a relatively smaller outer diameter.

To this end, according to the invention, the auxiliary tool comprises a combined means to apply two fasteners side by side and to cut the intestine between these fasteners, and said counter-pressure means are designed to let the pressure plate push against the extremity of the sausage with a constant force during filling to fill it to the tightest possible degree.

DE-A-2122644 discloses an auxiliary tool for filling sausages, comprising a double-acting cable cylinder, wherein the pressure plate is fastened onto the cable portion outside the double-acting cylinder. The pressure inside the cylinder is adjustable for controlling the pressure exerted by the pressure plate on the front extremity of the sausage, yet it is not suggested that this pressure should be constant. Instead, the pressure in the cylinder is likely to rise during the first traject of movement of the pressure plate.

Preferably, in order to restrict the length of the auxiliary tool, the pressure plate is connected to a slide of a cylinder without piston rod.

If the cylinder is air-operated it can be connected to three electro-pneumatic valves in such a way that the piston is also loaded with an over-pressure adjustable by a reduction valve during exertion of a constant counter-force.

In order to avoid the manual checking of the size of the sausages, an adjusting means is applied in an efficient embodiment to control the influence of the intestine brake and the reduction valve in a certain mutual relation depending on variations in the desired outer diameter of the sausage. The mentioned mutual relation is preferably in the proportion of 1 to 1.

Below the invention will be elucidated by a drawing having as an example an embodiment of an auxiliary tool according to the invention. The drawing shows in:
Fig. 1 a schematic longitudinal view of the auxiliary tool, and in
Fig. 2 an electro-pneumatic diagram of connections for the cylinder without piston rod of the auxiliary tool.

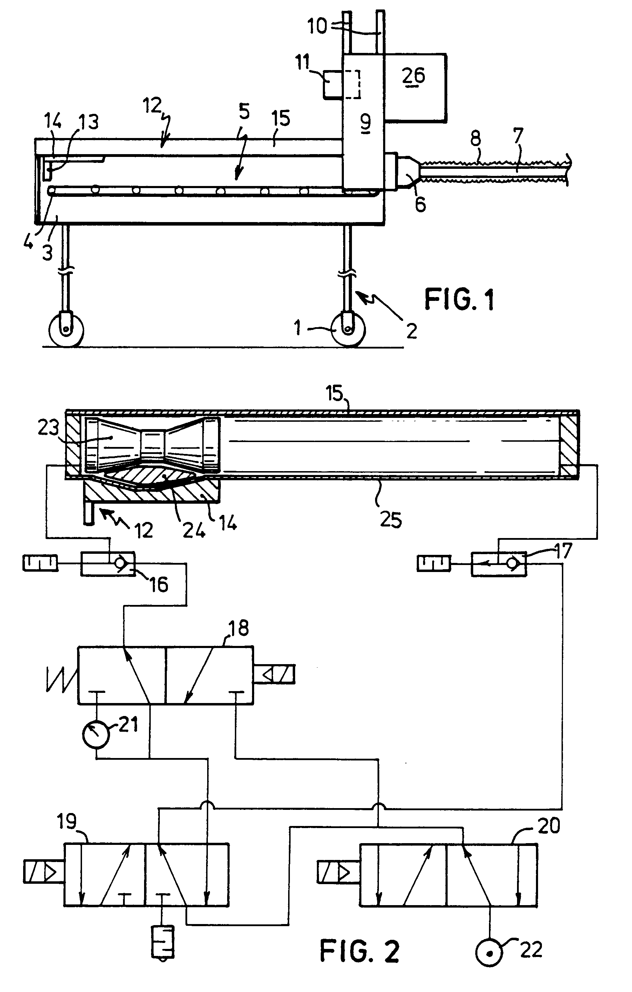

The auxiliary tool depicted in fig. 1 substantially comprises a carriage 2 being provided with the wheels 1 and having a table 3. The top side of this table 3 forms a support line 5 provided with freely-rotating rollers 4 for the (not depicted) sausages.

The carriage 2 is - in a known way - provided with a filling horn 7 having an intestine brake 6, which horn can be coupled to a sausage-filling machine. On the filling horn 7 an amount of intestine 8 to be filled is depicted. The extremity of the amount of intestine turned away from the sausage filling machine can be led through the intestine brake 6 and through a linking combined means 9 for applying side by side two fasteners or clips and for cutting the intestine in a part in between these two fasteners which has been completely rolled empty by "pincers" so that a sausage with extremities as flat as possible is obtained.

As the means 9 is generally known art, its details will not be elucidated further. There have been depicted, however, two supply lines 10 for the fasteners. The combined means 9 can, if desired, also be linked to a so called string applying device 11.

It is essential for the invention that a counter pressure means 12 is mounted above the support line 5. This counter pressure means 12 comprises a circular pressure plate 13 having a diameter practically corresponding to the desired outer diameter of the tightly filled sausage, which pressure plate 13 is mounted on a slide 14 of a cylinder without piston rod 15.

Fig. 2 shows a diagram of connections for the cylinder 15 as well as some details thereof. The diagram of connections contains two check valves 16 and 17 operating as fast air vents, three electro pneumatic valves 18, 19 and 20, and a reducting valve 21 which can adjustably lower the overpressure of 7 ato of air supplied by a compressor 22 to a pressure of approximately 1 ato.

In the cylinder 15 a double piston 23 with a narrowed linking part is applied. The slide 14 is provided with an internal recess to take up a double wedge 24 which is adapted in such a way to the narrowed piston 23 that a sealing strip 25 deforms in the direction of the constriction of the piston 23 during the passing through of the slide 14.

In the positions of the valves 18-20, depicted in Fig.2 the piston 23 is moved to the right under a pressure of 7 ato to contact rapidly a sausage just being filled. The air on the right side of the piston then escapes through a fast air vent belonging to check valve 17. Near the completion of the movement of the valve an (not depicted) approach switch is activated which changes the positions of the valves 18 and 19. As a result a constant force is exerted on the sausage corresponding to a pressure of approximately 1 ato during the movement to the left of a piston 23 by the sausage. An approach switch which accompanies the completion of this movement is movable in order to adjust it to the length of the sausage. If valve 20 is brought in another position, all the air will be gone from the machine.

Remains to be explained why the intestine brake 6 cannot be left out if a counter-pressure means 12 is provided. This would cause air to be drawn into the sausage substance and this should be prevented. Furthermore, the fastener could be pushed off the extremity of the sausage.

The method to work when using the auxiliary tool is as follows:

An intestine 8 is led through the intestine brake 6 and the means 9 which subsequently applies two fasteners and cuts the intestine between these two fasteners. Now the filling machine can be switched on, whereafter can be determined whether the sausage reaches the desired diameter. If not, the intestine brake 6 and the reduction valve 21 should be operated in such a way that the desired diameter is obtained. It could appear that they should be adjusted again after a certain period of time. In order to avoid this, the desired diameter could be checked continuously, for example by a photo electric gauge which is connected to an adjusting means dividing the necessary adjustments proportionally between the intestine brake and the reduction valve. The reason is that the fasteners could slip from the sausage if the full power of the intestine brake would be used first.

If the intestine is filled over the desired length having the desired density, the combined means 9 will automatically come into operation and the produced sausage will be sideways transported off support line 5 by a (not depicted) ejecting means. The counter pressure means 12 then returns rapidly to the next sausage of which the filling has already started. If run out of intestine, the machine will stop automatically and the filling horn 7 can be swerved out to mount a new quantity of intestine.

## Claims

1. Auxiliary tool for filling sausages, provided with a filling horn (7) equipped with an intestine brake (6) which horn can be coupled to a sausage-filling apparatus, said auxiliary tool substantially comprising a support line (5) for the sausages and counter-pressure means (12) which are mounted above the support line (5) and comprise a reciprocating pressure plate (13) pushing against the extremity of the sausage during filling, **characterized in that** the auxiliary tool comprises a combined means (9) to apply two fasteners side by side and to cut the intestine between these two fasteners and in that said counter-pressure means (12) are designed to let the pressure plate (13) push against the extremity of the sausage with a constant force during filling to fill it to the tightest possible degree.

2. Tool according to claim 1, **characterized in that** the pressure plate (13) is connected to a slide (14) of a cylinder (15) without piston rod.

3. Tool according to claim 2, **characterized in that** the cylinder (15) is connected to three electro-pneumatic valves (18-20) in such a way that the piston (23) of the cylinder is also loaded with an over-pressure adjustable by a reduction valve (21) during exertion of a constant counter force.

4. Tool according to one of the claims 1-3, **characterized in** **that** an adjusting means is applied which controls to influence of the intestine brake (6) and the reduction valve (21) in a certain mutual relation depending on variations in the desired outer diameter of the sausage.

5. Tool according to claim 4, **characterized in that** the mutual relation is approximately in the proportion of 1 to 1.

## Patentansprüche

1. Zusatzgerät für das Füllen von Würste das mit einem Füllhorn (7) ausgestattet ist, welches mit einer Bremse (6) für den Darm versehen ist, wobei das Horn mit einer Wurstfüllvorrichtung verbunden werden kann, wobei das Zusatzgerät im wesentlichen ein Trägerband (5) für die Würste und Gegendruckmittel (12) umfaßt, welche oberhalb des Trägerbandes (5) angeordnet sind und eine hin- und hergehende Druckplatte (13) aufweisen, die während des Füllvorganges gegen das Wurstende drückt,
**dadurch gekennzeichnet**, daß
die Zusatzvorrichtung kombinierte Mittel (9) aufweisen, um zwei Halter nebeneinander anzulegen und den Darm zwischen den beiden Haltern zu trennen
und, daß die Gegendruckmittel (12) dazu geeignet sind, während des Füllvorganges die Druckplatte (13) mit einer konstanten Kraft gegen das Ende der Wurst drücken zu lassen, um sie bis zur höchstmöglichen Dichte zu füllen.

2. Gerät nach Anspruch 1, dadurch gekennzeichnet, daß die Druckplatte (13) mit einem Schieber (14) eines Zylinders (15) verbunden ist, der keine Kolbenstange aufweist.

3. Gerät nach Anspruch 2, dadurch gekennzeichnet, daß der Zylinder (15) mit drei elektropneumatischen Ventilen (18-20) so verbunden ist, daß der Kolben (23) in dem Zylinder während der Ausübung einer konstanten Gegenkraft mit einem Überdruck beaufschlagt ist, der über ein Reduzierventil (21) regelbar ist.

4. Gerät nach einem der Ansprüche 1-3, gekennzeichnet durch Mittel, welche die Wirkung der Darmbremse (6) und des Reduzierventils (21) in einer bestimmten wechselseitigen Beziehung in Abhängigkeit von Veränderungen des gewünschten äußeren Durchmessers der Wurst steuern.

5. Gerät nach Anspruch 4, dadurch gekennzeichnet, daß die wechselseitige Beziehung ungefähr dem Verhältnis 1:1 entspricht.

## Revendications

1. Outil auxiliaire pour remplir des saucisses, pourvu d'un cornet de remplissage (7) équipé d'un frein (6) d'intestin, le cornet pouvant être couplé à un dispositif de remplissage de saucisse, l'outil auxiliaire comprenant essentiellement une ligne de soutien (5) pour les saucisses et des moyens de contre-pression (12) qui sont montés au-dessus de la ligne de soutien (5) et qui comprennent une plaque de pressage (13), à mouvement de va-et-vient, qui pousse contre l'extrémité de la saucisse pendant le remplissage, caractérisé en ce que l'outil auxiliaire comporte des moyens combinés (9) destinés à appliquer deux attaches côte à côte et à couper l'intestin entre ces deux attaches, et en ce que les moyens de contre-pression (12) sont conçus pour laisser la plaque de pressage (13) pousser contre l'extrémité de la saucisse avec une force constante pendant le remplissage afin de la remplir au degré le plus serré possible.

2. Outil suivant la revendication 1, caractérisé en ce que la plaque de pressage (13) est raccordée à un coulisseau (14) d'un cylindre (15) sans tige de piston.

3. Outil suivant la revendication 2, caractérisé en ce que le cylindre (15) est raccordé à trois vannes électropneumatiques (18 à 20) de manière que le piston (23) du cylindre soit aussi sollicité par une surpression, réglable par une vanne de réduction (21), pendant un emploi d'une force antagoniste constante.

4. Outil suivant l'une des revendications 1 à 3, caractérisé en ce que des moyens de réglage sont appliqués et commandent pour influencer le frein d'intestin (6) et la vanne de réduction (21) dans un certain rapport mutuel en fonction de variations du diamètre externe souhaité de la saucisse.

5. Outil suivant la revendication 4, caractérisé en ce que le rapport mutuel est approximativement dans la proportion de 1 à 1.
